(19) **Europäisches Patentamt**
**European Patent Office**
**Office européen des brevets**

(11) **EP 1 739 663 B1**

(12) **EUROPEAN PATENT SPECIFICATION**

(45) Date of publication and mention
of the grant of the patent:
**14.09.2011 Bulletin 2011/37**

(51) Int Cl.:
***G11B 7/0045*** (2006.01) ***G11B 7/125*** (2006.01)

(21) Application number: **05727959.8**

(22) Date of filing: **30.03.2005**

(86) International application number:
**PCT/JP2005/006144**

(87) International publication number:
**WO 2005/096279 (13.10.2005 Gazette 2005/41)**

(54) **INFORMATION RECORDING METHOD, INFORMATION RECORDING DEVICE AND INFORMATION RECORDING MEDIUM**

INFORMATIONSAUFZEICHNUNGSVERFAHREN, INFORMATIONSAUFZEICHNUNGSEINRICHTUNG UND INFORMATIONSAUFZEICHNUNGSMEDIUM

MÉTHODE D'ENREGISTREMENT D'INFORMATIONS, DISPOSITIF D'ENREGISTREMENT D'INFORMATIONS ET SUPPORT D'ENREGISTREMENT D'INFORMATIONS

(84) Designated Contracting States:
**DE FR GB NL**

(72) Inventor: **KOISHI, Kenji**
**Osaka 571-8501 (JP)**

(30) Priority: **30.03.2004 JP 2004101469**

(74) Representative: **Balsters, Robert**
**Novagraaf International S.A.**
**Chemin de l'Echo 3**
**1213 Onex (CH)**

(43) Date of publication of application:
**03.01.2007 Bulletin 2007/01**

(73) Proprietor: **Panasonic Corporation**
**Kadoma-shi**
**Osaka 571-8501 (JP)**

(56) References cited:
**EP-A- 0 642 128** **JP-A- 2000 285 464**
**JP-A- 2005 025 867** **US-A1- 2002 024 903**
**US-A1- 2003 090 981**

EP 1 739 663 B1

**Description**

TECHNICAL FIELD

The present invention relates to an information recording method and an information recording apparatus for forming at least one of a recording mark and a space onto an information recording medium by irradiating pulse train onto the information recording medium while rotating the information recording medium at a certain linear velocity, and an information recording medium having predetermined Information recorded thereon.

The present invention is, for example, utilized in a case where information is recorded on the information recording medium at a constant angular velocity (CAV) while maintaining a recording linear density almost constant by varying a recording clock in accordance with the changes in linear velocity.

BACKGROUND ART

When information is recorded onto an information recording medium (e.g. an optical disc) at a constant angular velocity (CAV), it is important to optimize a recording power level of the recording light pulse train for forming a recording mark in accordance with the recording linear velocity. The recording light pulse train includes two or more types of pulses. Each of the two or more pulses has a certain recording power level.

Document US2003/0090981 discloses in its 6th embodiment an information recording method and apparatus according to the preamble of claim 1 for recording information on a dye-based recording medium in which marks and spaces are formed by means of pulses. The power level of the pulses is an increasing function of the linear speed and the ratio between the middle pulse and the leading pulse of a mark is a strictly decreasing function of the speed.

Japanese laid-open patent publication No. 2001-344754 discloses a conventional technique for recording information at a constant angular velocity (CAV). According to this technique, information is preliminarily test recorded at certain rotation frequency in order to determine the optimum recording power level corresponding to the recording linear velocity. Then, based on the result of the test recording, the recording power level of each of two or more types of pulses is defined by a continuous function having only the recording linear velocity as variable.

In Japanese laid-open patent publication No. 2001-344754, the optimum recording power level is defined such that it is in proportion to the square root of the recording linear velocity, and the power level of an extra pulse at the leading portion of recording pulse is defined such that it is in inverse proportion to the recording linear velocity.

DISCLOSURE OF THE INVENTION

However, in a case where information is recorded at a constant angular velocity (CAV) at a high density and a high speed (e.g. in a case where information is recorded on a DVD-RAM), it is impossible to form a recording mark having an even mark width, even if the recording power level of each of two or more types of pulses is defined by a continuous function having only the recording linear velocity as variable. As a result, the quality of recording/reproduction signal representing information is degraded in a case where information is recorded at a constant angular velocity (CAV) at a high density and a high speed (e.g. in a case where information is recorded on a DVD-RAM).

The present invention is made in view of the problem described above. The purpose of the present invention is to provide an information recording method and an information recording apparatus for forming a recording mark having an appropriate shape and/or an appropriate mark width by determining the power level of pulses which are different from predetermined pulses depending on the recording linear velocity and the power level of the predetermined pulses without depending solely on the recording linear velocity.

An information recording method according to the present invention is defined in the appended claims and includes the steps of: (a) generating a pulse train including a first pulse and a second pulse: and (b) forming at least one of a recording mark and a space onto an information recording medium by irradiating the pulse train onto the information recording medium while rotating the information recording medium at a certain linear velocity, wherein the first pulse is a pulse for forming a central portion of the recording mark, among the recording mark and the space, the second pulse is a pulse forming a portion other than the central portion of the recording mark, among the recording mark and the space, and the step (a) includes a step of determining a power level of the first pulse in accordance with the linear velocity and a power level of the second pulse.

The secondpulse may include a third pulse for forming at least one of a leading portion of the recording mark and a trailing portion of the recording mark, and a power level of the first pulse may become equal to a power level of the third pulse in accordance with an increase in the linear velocity.

The second pulse may include a third pulse for forming one of a leading portion of the recording mark and a trailing portion of the recording mark, and a power level of the third pulse may be greater than a power level of the first pulse.

The second pulse may include a third pulse for forming a leading portion of the recording mark and a trailing portion of the recording mark, and a power level of the third pulse may be greater than a power level of the first pulse.

The power level of the first pulse may be determined in accordance with the following formula: Pm = $\alpha$(v) x (Pp - Pe) + Pe, the second pulse may include a third pulse for forming at least one of a leading portion of the recording mark and a trailing portion of the recording mark and a fourth pulse for forming the space, where Pm denotes the power level of the first pulse, $\alpha$(v) denotes a function of the linear velocity, Pp denotes a power level of the third pulse, and Pe denotes a power level of the fourth pulse, and the power level of the third pulse may be greater than the power level of the first pulse.

The power level of the first pulse may be determined in accordance with the following formula: Pm = $\alpha$(v) $\times$ Pe, the second pulse includes a fourth pulse for forming the space, and where Pm denotes the power level of the first pulse, $\alpha$(v) denotes a function of the linear velocity, and Pe denotes a power level of the fourth pulse.

The power level of the first pulse may be determined in accordance with the following formula: Pm = $\alpha$(v) $\times$ Pp, the second pulse may include a third pulse for forming at least one of a leading portion of the recording mark and a trailing portion of the recording mark, where Pm denotes the power level of the first pulse, $\alpha$(v) denotes a function of the linear velocity, and Pp denotes a power level of the third pulse, and the power level of the third pulse may be greater than the power level of the first pulse.

The power level of the first pulse may be determined in accordance with only the power level of the second pulse, when the linear velocity is at least one of near maximum linear velocity and near minimum linear velocity.

The power level of the first pulse may be determined in accordance with only the power level of the second pulse, when the linear velocity is near intermediate linear velocity.

An information recording medium according to the present invention is provided for recording information, wherein: at least one of a recording mark and a space is formed onto the information recording medium by irradiating a pulse train onto the information recording medium while rotating the information recording medium at a certain linear velocity, the pulse train includes a first pulse and a second pulse, the first pulse is a pulse for forming a central portion of the recording mark, among the recording mark and the space, the second pulse is a pulse for forming a portion other than the central portion of the recording mark, among the recording mark and the space, a power level of the first pulse is determined in accordance with the linear velocity and a power level of the second pulse, and the information recording medium has an area on which the power level of the first pulse is recorded.

$\alpha$(v) may be recorded in the area, and $\alpha$(v) denotes a relationship between the linear velocity and the power level of the second pulse.

An information recording apparatus according to the present invention is defined in the appended claims and includes: a pulse train generating means for generating a pulse train including a first pulse and a second pulse; and a forming means for forming at least one of a recording mark and a space onto the information recording medium by irradiating the pulse train onto the information recording medium while rotating the information recording medium at a certain linear velocity, wherein the first pulse is a pulse for forming a central portion of the recording mark, among the recording mark and the space, the second pulse is a pulse for forming a portion other than the central portion of the recording mark, among the recording mark and the space, and the pulse train generating means includes a power level determining means for determining a power level of the first pulse in accordance with the linear velocity and a power level of the second pulse.

BRIEF DESCRIPTION OF THE DRAWINGS

Figure 1 is a diagram showing a structure of an information recording apparatus 100 according to an embodiment of the present invention.

Figure 2A is a diagram showing a waveform of a recording light pulse, in connection with properly forming the mark width of the central portion of the recording mark.

Figure 2B is a diagram showing a shape of recording mark, in connection with properly forming the mark width of the central portion of the recording mark.

Figure 2C is a diagram showing a reproduction waveform, in connection with properly forming the mark width of the central portion of the recording mark.

Figure 3A is a diagram showing a relationship (pattern 1) between a first power coefficient $\alpha$(v) and recording linear velocity v.

Figure 3B is a diagram showing a relationship (pattern 2) between a first power coefficient $\alpha(v)$ and recording linear velocity v.

Figure 3C is a diagram showing a relationship (pattern 3) between a first power coefficient $\alpha(v)$ and recording linear velocity v.

Figure 3D is a diagram showing a relationship (pattern 4) between a first power coefficient $\alpha(v)$ and recording linear velocity v.

Figure 4 is a flowchart showing a procedure of forming a recording mark on an optical disc in a manner that the mark width of the central portion of the recording mark is formed properly.

Figure 5A is a diagram showing a recording pulse waveform, in connection with properly forming the mark width of the short recording mark.

Figure 5B is a diagram showing a shape of the recording mark, in connection with properly forming the mark width of the short recording mark.

Figure 6A is a diagram showing a relationship (pattern 5) between a second power coefficient $\beta(v)$ and recording linear velocity v.

Figure 6B is a diagram showing a relationship (pattern 6) between a second power coefficient $\beta(v)$ and recording linear velocity v.

Figure 6C is a diagram showing a relationship (pattern 7) between a second power coefficient $\beta(v)$ and recording linear velocity v.

Figure 6D is a diagram showing a relationship (pattern 8) between a second power coefficient $\beta(v)$ and recording linear velocity v.

Figure 7 is a flowchart showing a procedure of forming a recording mark on an optical disc in a manner that the mark width of the short recording mark is formed properly.

| 100 | Information recording apparatus |
|---|---|
| 101 | Optical disc |
| 102 | System control circuit |
| 103 | Modulation circuit |
| 104 | Recording pulse train generation circuit |
| 105 | Laser drive circuit |
| 106 | Optical head |
| 107 | Spindle motor |
| 108 | Linear velocity setup circuit |
| 109 | Reproduction signal process circuit |
| 110 | Demodulation circuit |
| 111 | Recording clock setup circuit |
| 113 | Jitter detection circuit |
| 114 | BER detection circuit |
| 115 | Laser power control circuit |
| 120 | Recording system section |
| 130 | Reproduction system section |
| 140 | Detection section |

BEST MODE FOR CARRYING OUT THE INVENTION

Hereinafter, the embodiments of the present invention will be described below with reference to the drawings.

## 1. Structure of an information recording apparatus 100

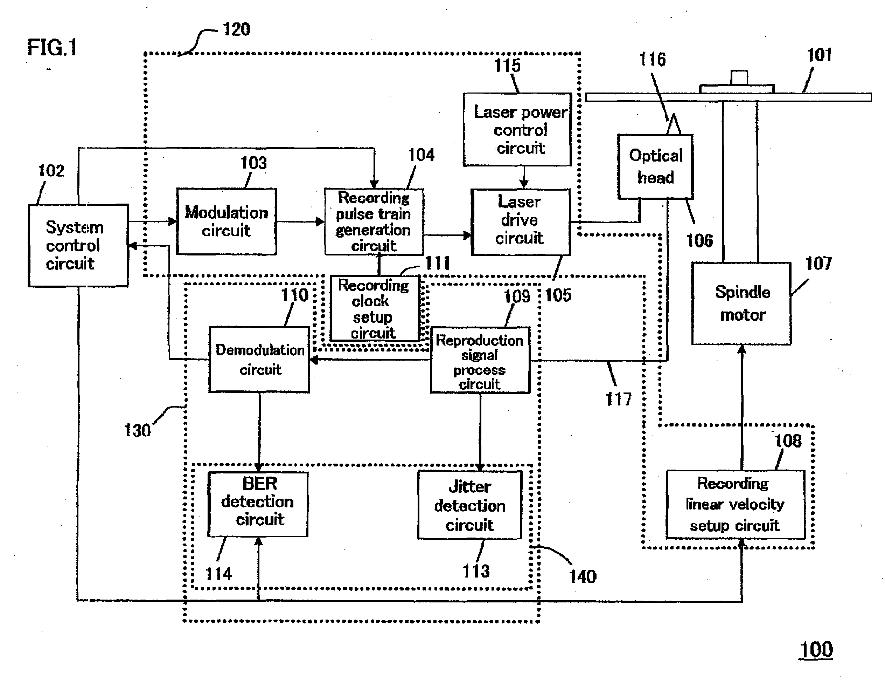

Figure 1 shows a structure of an information recording apparatus 100 according to an embodiment of the present invention.

The information recording apparatus 100 is constructed to be inserted with an information recording medium 101 (hereafter, optical disc 101) for recording and/or reproducing data.

The information recording apparatus 100 includes an optical head 106, a spindle motor 107, a system control circuit 102, a recording system section 120, and a reproduction system section 130.

The system control circuit 102 controls the operation of all the components included in the information recording apparatus 100. The optical head 106 converges the light of the semiconductor laser and irradiates the converged light onto the optical disc 101. The spindle motor 107 drives the optical disc 101 so that the optical disc 101 rotates.

The optical head 106, the spindle motor 107, the system control circuit 102 and the recording system section 120 form at least one of a recording mark and a space onto the optical disc 101, by irradiating a pulse train onto the optical disc 101 while rotating the optical disc 101 at a certain linear velocity.

The recording system section 120 include a modulation circuit 103, a recording pulse train generation circuit 104, a laser drive circuit 105, a linear velocity setup circuit 108, a recording clock setup circuit 111 and a laser power control circuit 115.

The modulation circuit 103 converts data to be recorded on the optical disc 101 into recording modulation codes having two values.

The recording pulse train generation circuit 104 drives the laser such that the recording pulse train is generated based on the recording modulation codes. For example, the recording pulse train generation circuit 104 drives the laser such that it corrects a proper location of the leading pulse located at the start of the recording pulse train and a proper location of the trailing pulse located at the end of the recording pulse train.

The linear velocity setup circuit 108 sets the rotational velocity of the optical disc 101 by controlling the rotation frequency of the spindle motor 107. The recording clock setup circuit 111 sets the clock of the recording pulse train generation circuit 104 according to the recording linear velocity of the optical disc 101. The laser power control circuit 115 controls the recording power level of the recording pulse train. The laser drive circuit 105 drives the electric current of the semiconductor laser provided on the optical head 106 based on the recording pulse train generated by the recording pulse train generation circuit 104 and the recording power level controlled by the laser power control circuit 115.

The reproduction system section 130 includes a reproduction signal process circuit 109, a demodulation circuit 110 and a detection section 140.

The reproduction signal process circuit 109 processes reproduction signals reproduced from the optical head 106 (e.g. converts the reproduction signal into two values and reproduces the clock of the reproduction signal). The demodulation circuit 110 decodes the reproduction signals and generates reproduction data.

The detection section 140 optimizes the recording pulse train, which is a recording parameter, and the recording power. The detection section 140 includes a jitter detection circuit 113 and a BER detection circuit 114. The jitter detection circuit 113 detects a jitter value of the reproduction signal. The BER detection circuit 114 detects a bit error rate of the reproduction signal.

A single-chip LSI may include at least one of the recording system section 120 and the reproduction system section 130. A single-chip LSI may include the recording system section 120, the reproduction system section 130 and the system control circuit 102. The manufacture process of the information recording apparatus 100 may be facilitated by including at least one of the recording system section 120 and the reproduction system section 130 in a single-chip LSI or by including the recording system section 120, the reproduction system section 130 and the system control circuit 102 in a single-chip LSI.

## 2. Proper formation of the mark width of the central portion of the recording mark

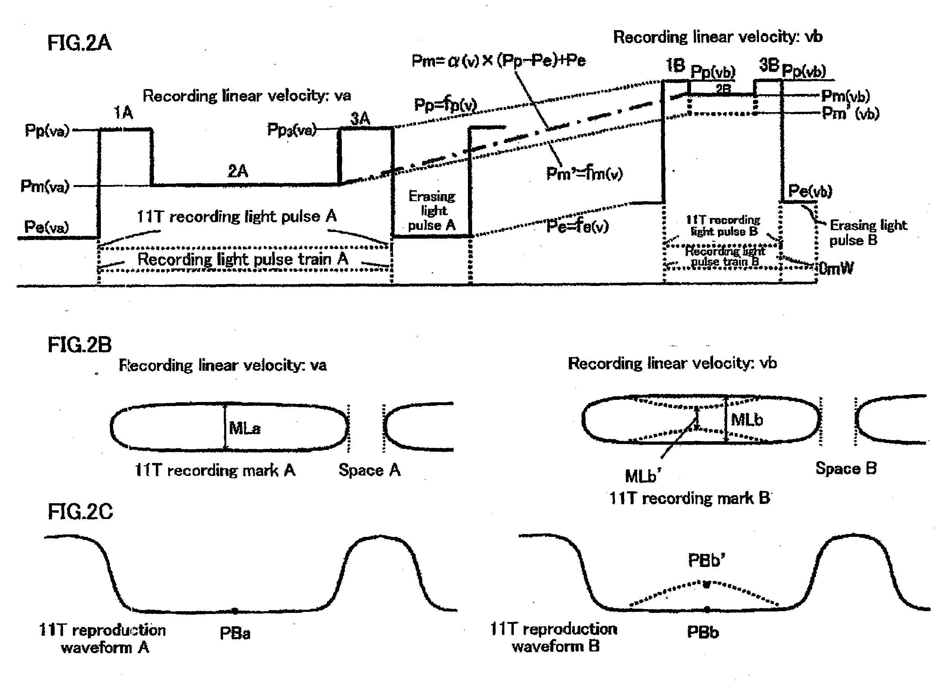

Figures 2A to 2C are diagrams for explaining the proper formation of the mark width of the central portion of the recording mark.

Figure 2A shows a waveform of a recording light pulse train A and a waveform of a recording light pulse train B. The recording light pulse train A and the recording light pulse train B are observed by the emission output 116 of the optical head 106 (see Figure 1).

The recording light pulse train A includes an 11T recording light pulse A and an erasing light pulse A.

The 11T recording light pulse A is a recording light pulse for forming a recording mark having a length of 11T when the recording linear velocity is at the lowest recording linear velocity va, where T denotes a cycle of the recording clock. The recording light pulse train A includes a leading pulse 1A, an intermediate pulse 2A and a trailing pulse 3A.

The leading pulse 1A is located in the vicinity of a leading edge of the 11T recording light pulse A and has a peak power level $Pp_1(va)$. The intermediate pulse 2A is located at the central portion of the 11T recording light pulse A and has a middle power level Pm(va). For example, the intermediate pulse 2A is one pulse having a certain length. The trailing pulse 3A is located in the vicinity of a trailing edge of 11T recording light pulse A and has a peak power level $Pp_3(va)$.

The erasing light pulse A is a light pulse for forming a space when the recording linear velocity is at the lowest recording linear velocity va. The erasing light pulse A is located adjacent to the 11T recording light pulse A and has an erasing power level Pe(va).

$Pp_1(va)$, Pm(va), $Pp_3(va)$ and Pe(va) satisfy a relationship of $Pe(va) < Pm(va) < Pp_1(va) - Pp_3(va)$.

The recording light pulse train B includes an 11T recording light pulse B and an erasing light pulse B.

The 11T recording light pulse B is a recording light pulse for forming a recording mark having a length of 11T when the recording linear velocity is at the highest recording linear velocity vb. The recording light pulse train B includes a leading pulse 1B, an intermediate pulse 2B and a trailing pulse 3B.

The leading pulse 1B is located in the vicinity of a leading edge of the 11T recording light pulse B and has a peak power level $Pp_1(vb)$. The intermediate pulse 2B is located at the central portion of the 11T recording light pulse B and has a middle power level Pm(vb). For example, the intermediate pulse 2B is one pulse having a certain length. The trailing pulse 3B is located in the vicinity of a trailing edge of the 11T recording light pulse B and has a peak power level $Pp_3(vb)$.

The erasing light pulse B is an light pulse for forming a space when the recording linear velocity is at the highest recording linear velocity vb. The erasing light pulse B is located adjacent to the 11T recording light pulse B and has an erasing power level Pe(vb).

$Pp_1(vb)$, Pm(vb), $Pp_3(vb)$ and Pe(vb) satisfy a relationship of $Pe(vb) < Pm(vb) < Pp_1(vb) = Pp_3(vb)$.

The 11T recording light pulse does not necessarily include both the leading pulse 1 and the trailing pulse 3. The 11T recording light pulse may include at least one of the leading pulse 1 and the trailing pulse 3 depending on how much the heat energy affects the recording material of the optical disc 101.

Furthermore, it is not limited that the recording power level of the 11T recording light pulse has two values ($Pp_1=Pp_3<PM$). The recording power level of the 11T recording light pulse may have more than two values. For example, the recording power level of the 11T recording light pulse may have three values ($Pp_1 \neq Pp_3$ and $Pm < Pp_1$ and $Pm < Pp_3$).

Further, the intermediate pulse 2A and the intermediate pulse 2B are not limited to one pulse having a predetermined length.

For example, when the recording mark is formed in a relatively low recording rate, the intermediate pulse 2A and the intermediate pulse 2B may be multi-pulse train. For example, the multi-pulse train includes a plurality of pulses each having a pulse width of 0.5T.

For example, when the recording mark is formed on the optical disc 101 at a high density and a high speed (e.g. when it is formed on a DVD-RAM), the intermediate pulse 2A and the intermediate pulse 2B may be one pulse having a predetermined length. It is possible to properly control the recording mark width by irradiating a pulse having a middle power level Pm which is equal to an integral heat energy of the multi-pulse train. For example, when the optical disc 101 is made of phase change recording materials, the irradiation time of the recording light pulse becomes shorter as the recording rate increases. Therefore, irradiation of pulse with a middle power level Pm rapidly cools the portion at which recording mark is formed. As a result, it is possible to form amorphous mark without cooling with a multi-pulse train.

Figure 2B shows an 11T recording mark A and a space A and an 11T recording mark B and a space B.

The 11T recording mark A is formed on the optical disc 101 by irradiating the 11T recording light pulse A onto an information layer (not shown) of the optical disc 101, when the recording linear velocity is at the lowest recording linear velocity va. The space A is formed on the optical disc 101 by irradiating the erasing light pulse A onto the information layer, when the recording linear velocity is at the lowest recording linear velocity va. The 11T recording mark B is formed on the optical disc 101 by irradiating the 11T recording light pulse B onto the information layer when the recording linear velocity is at the highest recording linear velocity vb. The space B is formed on the optical disc 101 by irradiating the erasing light pulse B onto the information layer when the recording linear velocity is at the highest recording linear velocity vb.

The intermediate pulse 2A is a pulse for forming a central portion of the 11T recording mark A, among the 11T recording mark A and space A when the recording linear velocity is at the lowest recording linear velocity va. The intermediate pulse 2B is a pulse for forming a central portion of the 11T recording mark B, among the 11T recording mark B and the space B when the recording linear velocity is at the highest recording linear velocity vb.

The leading pulse 1A, the trailing pulse 3A and the erasing light pulse A are pulses for forming a portion other than the central portion of the 11T recording mark A, among the 11T recording mark A and space A, when the recording linear velocity is at the lowest recording linear velocity va. The leading pulse 1B, the trailing pulse 3B and the erasing light pulse B are pulses for forming a portion other than the central portion of the 11T recording mark B, among the 11T recording mark B and the space B, when the recording linear velocity is at the highest recording linear velocity vb.

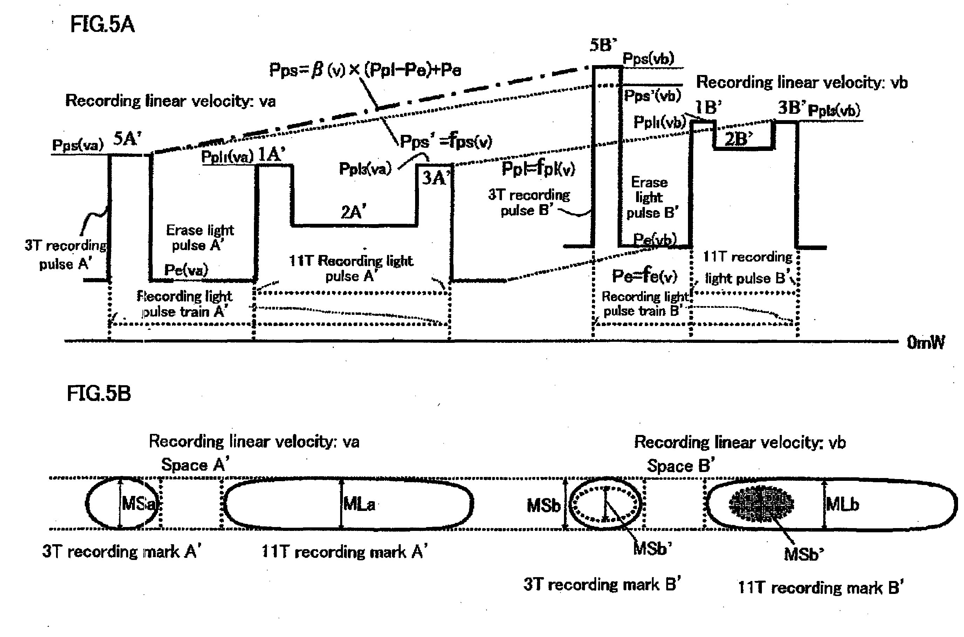

Figure 2C shows a waveform PBa of the reproduction signal and a waveform PBb of the reproduction signal. The reproduction signal having a waveform PBa and the reproduction signal having a waveform PBb are output from the reproduction output 117 of the optical head 106 (see Figures 5A and 5B).

The waveform PBa of the reproduction signal is detected by reproducing information presented by the 11T recording mark A, when the recording linear velocity is at the lowest recording linear velocity va. The waveform PBb of the reproduction signal is detected by reproducing information presented by the 11T recording mark B, when the recording linear velocity is at the highest recording linear velocity vb.

The operation of laser power control circuit 115 will be described below with reference to Figures 2A to 2C.

When the peak power level Pp(va) and the peak power level Pp(vb) are determined, the peak power level Pp(v) can be obtained by a continuous function Pp - fp(v) having only the recording linear velocity v as variable. This is because the peak power level Pp (v) determines the highest temperature of the heat energy necessary for amorphization of the recordingmark, and therefore greatly depends on the recording linear velocity, which is the moving velocity of the heat energy.

When the erasing power level Pe(va) and the erasing power level Pe(vb) are determined, the erasing power level Pe(v) can be obtained by a continuous function Pe - fe(v) having only the recording linear velocity v as variable. This is because the erasing power level Pe(v) determines the optimum temperature of the heat energy necessary for crystallization of the space, and therefore greatly depends on the recording linear velocity, which is the moving velocity of the heat energy.

However, the middle power level Pm(v) can not be obtained by a continuous function Pm' = fm(v) having only the recording linear velocity v as variable. For Pm'(vb), the width MLb' of the central portion of recording mark is shorter than the width MLb of the central portion of optimum recording mark (see Figure 2B). This is because Pm' (vb) is lower than the optimum middle power level Pm(vb) (see Figure 2A).

The middle power level Pm determines the heat energy that equalizes the mark width of the recording mark. Thus, the middle power level Pm depends on the peak power level Pp (which determines the highest temperature of the heat energy necessary for amorphization of the recording mark) and the erasing power level Pe (which determines the optimum temperature of the heat energy necessary for crystallization of the space).

The first power coefficient $\alpha(v)$ defines a coefficient (power ratio) that regulates the dependency between the middle power level Pm, the peak power level Pp and the erasing power level Pe. The first power coefficient $\alpha(v)$ also depends on the recording linear velocity v. In general, the greater the recording linear velocity v, the greater the first power coefficient $\alpha(v)$.

In accordance with an increase in the recording linear velocity v, the middle power level Pm and the peak power level Pp become equal to each other. For example, the middle power level Pm optimum for evenly forming the central portion of the recording mark is closer to the peak power level Pp in a case where the recording linear velocity v is greater compared to a case where the recording linear velocity v is smaller.

The middle power level Pm(v) depends on the recording linear velocity v, the peak power level Pp(v) and the erasing power level Pe (v). Accordingly, it satisfies a relationship shown in the following formula (1).

$$Pm(v) = \alpha(v) \times (Pp(v) - Pe(v)) + Pe(v) \quad ...(1)$$

The laser power control circuit 115 controls the middle power level Pm, in accordance with the formula (1). In this case, the mark width MLa of the recording mark having 11T length when the recording linear velocity is va is equal to the mark width MLb when the recording linear velocity is vb. Since the first power coefficient $\alpha(v)$ is a continuous function $\alpha(v)$ of the recording linear velocity v, it is possible to form an even recording mark when the recording linear velocity is v (va $\leq$ v $\leq$ vb).

The relationship between the middle power level Pm(v), the recording linear velocity v, the peak power level Pp(v) and the erasing power level Pe(v) is not limited to the relationship shown in the formula (1). The relationship between the middle power level Pm(v), the recording linear velocity v, the peak power level Pp(v) and the erasing power level Pe(v) may be a relationship shown in the following formula (2) or formula (3).

$$Pm(v) = \alpha(v) \times Pe(v) \quad ... (2)$$

$$Pm(v) = \alpha(v) \times Pp(v) \quad ... (3)$$

When the middle power level Pm(v) depends greatly on the erasing power level Pe(v), the laser power control circuit 115 controls the middle power level Pm(v) in accordance with the formula (2).

When the middle power level Pm(v) depends greatly on the peak power level Pp (v), the laser power control circuit 115 controls the middle power level Pm(v) in accordance with the formula (3).

The optimization of the first power coefficient $\alpha$(v) will be described below with reference to Figures 2A to 2C.

When a(va) is optimized, the waveform PBa of the reproduction signal is generally flat and the 11T recording mark A having an even mark width MLa is formed.

When $\alpha$(vb) is optimized, the waveform PBb of the reproduction signal is flat and the 11T recording mark B having an even mark width MLb is formed. When $\alpha$(vb) is not optimised, the waveform PBb' of the reproduction signal is not flat and the 11T recording mark B having an uneven mark width MLb' is formed.

Thus, the laser power control circuit 115 observes a non-flat waveform of the reproduction signal having a recording linear velocity v(va $\leq$ v $\leq$ vb), and controls the middle power level Pm(v) so that the reproduction waveform becomes generally flat. Therefore, the first power coefficient $\alpha$(v) may be optimized and the mark width of relatively long recording mark may be equalized even if the recording linear velocity changes.

Thus, an embodiment of the present invention has been described, with reference to Figures 1 and 2A to 2C.

In the embodiment shown in Figures 1 and 2A to 2C, for example, the system control circuit 102, the modulation circuit 103, the recording pulse train generation circuit 104 and the laser power control circuit 115 correspond to "a pulse train generating means for generating a pulse train including a first pulse and a second pulse". The optical head 106, the spindle motor 107, the system control circuit 102 and the recording system circuits 120 correspond to "a forming means for forming at least one of a recording mark and a space onto an information recording medium by irradiating a pulse train onto the information recording medium while rotating the information recording medium at a certain linear velocity". The laser power control circuit 115 corresponds to "a power level determining means for determining a power level of the first pulse in accordance with the linear velocity and a power level of the second pulse". Further, the intermediate pulse 2A or the intermediate pulse 2B corresponds to "a first pulse for forming a central portion of the recording mark, among the recording mark and the space". The leading pulse 1A, trailing pulse 3A and the erasing light pulse A (or the leading pulse 1B, trailing pulse 3B and the erasing light pulse B) correspond to "a second pulse for forming a portion other than the central portion of the recording mark, among the recording mark and the space".

However, the information recording apparatus 100 of the present invention is not limited to the embodiment shown in Figures 1 and 2A to 2C. The information recording apparatus 100 can have any structure, as long as the information recording apparatus 100 includes the above-mentioned functions of "the pulse train generating means for generating a pulse train including a first pulse and a second pulse", "the forming means for forming at least one of a recording mark and a space onto an information recording medium by irradiating a pulse train onto the information recording medium while rotating the information recording medium at a certain linear velocity", and "the power level determining means for determining a power level of the first pulse in accordance with the linear velocity and a power level of the second pulse". Any pulse can be used as a first pulse, as long as it is "a first pulse for forming a central portion of the recording mark, among the recording mark and the space" and any pulse can be used as a second pulse, as long as it is "a second pulse for forming a portion other than the central portion of the recording mark, among the recording mark and the space".

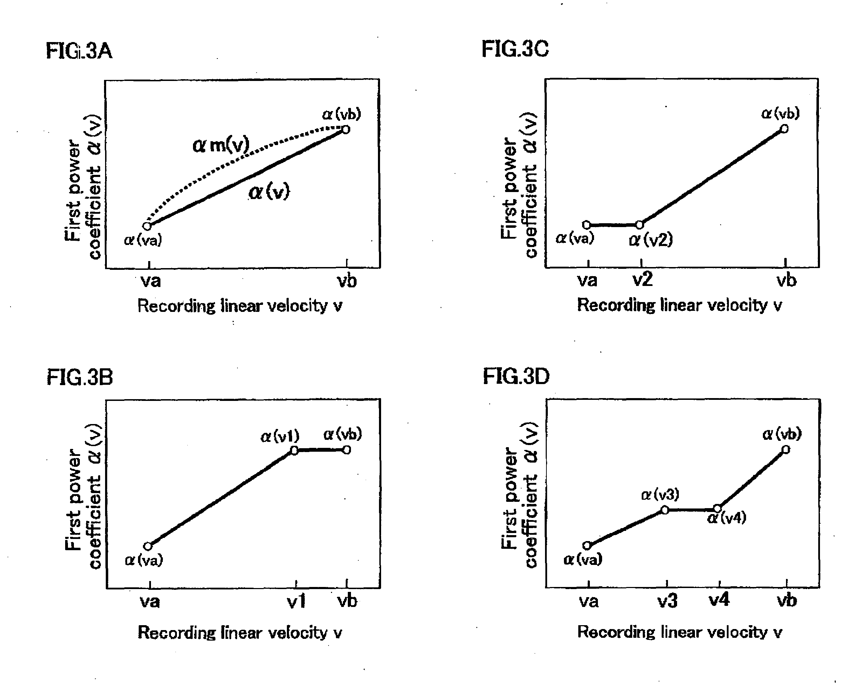

Figures 3A to 3D each show a relationship between the first power coefficient $\alpha$(v) and the recording linear velocity v. When the value of the first power coefficient $\alpha$(v) is optimized by the recording linear velocity v, the relationship between the first power coefficient $\alpha$(v) and the recording linear velocity v presents several patterns depending on the materials of the optical disc 101 and/or the absolute value of the recording linear velocity.

Figure 3A shows a relationship (pattern 1) between the first power coefficient $\alpha$(v) and the recording linear velocity v. The first power coefficient $\alpha$(v) increases substantially linearly along with the increase in the recording linear velocity v, between the recording linear velocity va and the recording linear velocity vb. Alternatively, the first power coefficient $\alpha$(v) may increase substantially exponentially along with the increase in the recording linear velocity v, between the recording linear velocity va and the recording linear velocity vb (see $\alpha$m (v) indicated in broken lines).

Figure 3B shows a relationship (pattern 2) between the first power coefficient $\alpha$(v) and the recording linear velocity v.

The first power coefficient $\alpha$(v) is substantially constant between the recording linear velocity v1 and the recording linear velocity vb (the high speed side of the recording linear velocity v) without depending on the changes in the recording linear velocity v. Between the recording linear velocity v1 and the recording linear velocity vb, the first power coefficient $\alpha$(v) is substantially constant even if the peak power level Pp and the erasing power level Pe changes along with the changes in the recording linear velocity v. Accordingly, although the middle power level Pm changes along with the changes in the recording linear velocity v, the power ratio of the middle power level Pm and the peak power level Pp as well as the power ratio of the middle power level Pm and the erasing power level Pe are substantially constant.

The first power coefficient $\alpha$(v) increases substantially linearly along with the increase in the recording linear velocity v, between the recording linear velocity va and the recording linear velocity v1.

Figure 3C shows a relationship (pattern 3) between the first power coefficient $\alpha$(v) and the recording linear velocity v.

The first power coefficient $\alpha(v)$ is substantially constant between the recording linear velocity va and the recording linear velocity v2 (the low speed side of the recording linear velocity v) without depending on the changes in the recording linear velocity v. Between the recording linear velocity va and the recording linear velocity v2, the first power coefficient $\alpha(v)$ is substantially constant even if the peak power level Pp and the erasing power level Pe changes along with the changes in the recording linear velocity v. Accordingly, although the middle power level Pm changes along with the changes in the recording linear velocity v, the power ratio of the middle power level Pm and the peak power level Pp as well as the power ratio of the middle power level Pm and the erasing power level Pe are substantially constant.

The first power coefficient $\alpha(v)$ increases substantially linearly along with the increase in the recording linear velocity v, between the recording linear velocity v2 and the recording linear velocity vb.

Figure 3D shows a relationship (pattern 4) between the first power coefficient $\alpha(v)$ and the recording linear velocity v.

The first power coefficient $\alpha(v)$ is substantially constant between the recording linear velocity v3 and the recording linear velocity v4 (the middle speed portion of the recording linear velocity v) without depending on the changes in the recording linear velocity v. Between the recording linear velocity v3 and the recording linear velocity v4, the first power coefficient $\alpha(v)$ is substantially constant even if the peak power level Pp and the erasing power level Pe changes along with the changes in the recording linear velocity v. Accordingly, although the middle power level Pm changes along with the changes in the recording linear velocity v, the power ratio of the middle power level Pm and the peak power level Pp as well as the power ratio of the middle power level Pm and the erasing power level Pe are substantially constant.

The first power coefficient $\alpha(v)$ increases substantially linearly along with the increase in the recording linear velocity v, between the recording linear velocity va and the recording linear velocity v3 as well as the recording linear velocity v4 and the recording linear velocity vb.

As described with reference to Figures 2A to 2C, it is not limited that the recording power level of the 11T recording light pulse has two values (Pm < $Pp_1$ = $Pp_3$). The recording power level of the 11T recording light pulse may take a single value. For example, as described with reference to Figure 3B, when the relationship between the first power coefficient $\alpha(v)$ and the recording linear velocity v is pattern 2, the equation $Pp_1 = Pp_3 = Pm$ may be satisfied between the recording linear velocity v1 and the recording linear velocity vb. For example, as described with reference to Figure 3C, when the relationship between the first power coefficient $\alpha(v)$ and the recording linear velocity v is pattern 3, the equation $Pp_1 = Pp_3 = Pm$ may be satisfied between the recording linear velocity va and the recording linear velocity v2.

The optical disc 101 may have an area on which a middle power level Pm(v) is previously recorded. The middle power level Pm is determined in accordance with the recording linear velocity v and the power level of the second pulse (e.g. at least one of the peak power level Pp and the erasing power level Pe).

The first power coefficient $\alpha(v)$ may be determined to a certain level depending on the recording material of the optical disc 101 and the recording linear velocity. Accordingly, the manufacturer of the optical disc 101 can determine a recommended first power coefficient $\alpha(v)$. For example, the manufacturer of the optical disc 101 can write the value of the first power coefficient $\alpha(v)$ or the arithmetic expression of the first power coefficient $\alpha(v)$ on the control track of the optical disc 101. As a result, it is possible to reduce an optimum processing time of the first power coefficient $\alpha(v)$. The first power coefficient $\alpha(v)$ indicates a relationship between the recording linear velocity v and the power level of the second pulse.

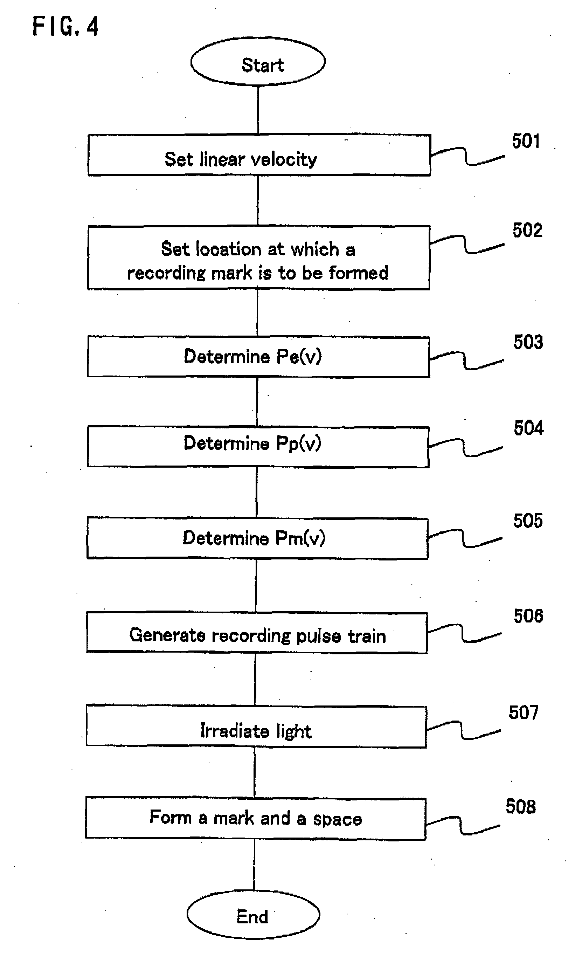

Figure 4 shows a procedure of a formation process for forming a recording mark on an optical disc such that the mark width of the central portion of the recording mark may be formed properly.

The procedure of the formation process includes a power level determination step (Steps 501 to 505), a recording pulse train generation step (Step 506) and a recording mark formation step (Steps 507 and 508).

The power level determination step is performed, for example, by the system control circuit 102 and the modulation circuit 103.

The recording pulse train generation step is performed, for example, by the system control circuit 102, the modulation circuit 103, the recording pulse train generation circuit 104 and the laser power control circuit 115.

The recording mark formation step is performed, for example, by the optical head 106, the spindle motor 107, the system control circuit 102 and the recording system section 120.

The procedure of the formation process will be described below for each step, with reference to Figures 1 and 4.

Step 501: The rotational velocity of the spindle motor 107 is set to the linear velocity (v) in the recording area of the optical disc 101.

Step 502: The seek operation of the optical head 106 is performed for the recording area, and a location at which a recording mark is to be formed is set in the recording area.

Step 503: The erasing power level Pe(v) is determined based on the linear velocity (v) at the current location of the recording area.

Step 504: The peak power level Pp(v) is determined based on the linear velocity (v) at the present location of the recording area.

Step 505: The middle power level Pm(v) is determined based on at least one of the erasing power level Pe and the peak power level Pp, and the linear velocity (v).

Step 506: The recording pulse train generation circuit 104 generates a recording pulse train based on the determined erasing power level Pe(v), the determined peak power level Pp(v) and the determined middle power level Pm(v).

Step 507: The semiconductor laser apparatus mounted on the optical head 106 is driven by inputting the generated recording pulse train to the laser drive circuit 105. The semiconductor laser apparatus irradiates light corresponding to the generated pulse train.

Step 508: At least one of a recording mark and a space is formed on the optical disc 101. Then, the formation process is completed.

Thus, an embodiment of the present invention has been described, with reference to Figure 4.

In the embodiment shown in Figure 4, for example, Steps 501 to 506 correspond to "a step of generating a pulse train including a first pulse and a second pulse". Steps 507 and 508 correspond to "a step of forming at least one of a recording mark and a space onto an information recording medium by irradiating the pulse train onto the information recording medium while rotating the information recording medium at a certain linear velocity". Step 505 corresponds to "a step of determining a power level of the first pulse in accordance with the linear velocity and a power level of the second pulse". Further, the intermediate pulse 2A or the intermediate pulse 2B corresponds to "a first pulse for forming a central portion of the recording mark, among the recording mark and the space". The leading pulse 1A, the trailing pulse 3A and the erasing light pulse A (or the leading pulse 1B, the trailing pulse 3B and the erasing light pulse B) correspond to "a second pulse for forming a portion other than the central portion of the recording mark, among the recording mark and the space".

However, the procedure of the formation process of the present invention is not limited to the embodiment shown in Figure 4. Any process may be implemented, as long as the procedure provides the above-mentioned functions of "a step of generating a pulse train including a first pulse and a second pulse", "a step of forming at least one of a recording mark and a space onto an information recording medium by irradiating the pulse train onto the information recording medium while rotating the information recording medium at a certain linear velocity", and "a step of determining a power level of the first pulse in accordance with the linear velocity and a power level of the second pulse". Further, any pulse can be used as a first pulse, as long as it is "a first pulse for forming a central portion of the recording mark, among the recording mark and the space". Any pulse can be used as a second pulse, as long as it is "a second pulse for forming a portion other than the central portion of the recording mark, among the recording mark and the space".

According to the information recording method, the information recording apparatus and the information recording medium of the present invention, the power level of the first pulse is determined depending on the linear velocity and the power level of the second pulse (depending on the first power coefficient $\alpha(v)$), without depending solely on the linear velocity. The first pulse is a pulse for forming a central portion of the recording mark, among the recording mark and the space. The second pulse is a pulse for forming a portion other than the central portion of the recording mark, among the recording mark and the space.

As a result, the mark width of the central portion of the recording mark can be formed properly, even when the mark width of the central portion of the recording mark is formed depending on the linear velocity and the power level of the second pulse.

According to the information recording method, the information recording apparatus and the information recording medium of the present invention, a recording mark having even mark width can be formed even if information is recorded at a constant angular velocity at a high density and a high speed (for example, when information is recorded on a DVD-RAM). Furthermore, a recording/reproduction signal having a favorable overwrite property can be obtained. As a result, highly reliable recording/reproduction performance can be secured throughout the entire information recording medium.

Illustrative example

3. Proper formation of the mark width of the short recording mark

Figures 5A and 5B are diagrams for explaining the proper formation of the mark width of the short recording mark.

Figure 5A shows a waveform of a recording light pulse train A' and a waveform of a recording light pulse train B'. The recording light pulse train A' and the recording light pulse train B' are observed by the emission output 116 of the optical head 106 (see Figure 1.).

The recording light pulse train A' includes a 3T recording light pulse A', an 11T recording light pulse A' and an erasing light pulse A'.

The 3T recording light pulse A' is a recording light pulse for forming a recording mark having a length of 3T when the recording linear velocity is at the lowest recording linear velocity va. The 3T recording light pulse A' is a peak pulse having a peak power level Pps(va).

The 11T recording light pulse A' is a recording light pulse for forming a recording mark having a length of 11T when the recording linear velocity is at the lowest recording linear velocity va. The recording light pulse train A' includes a leading pulse 1A', an intermediate pulse 2A' and a trailing pulse 3A'.

The leading pulse 1A' is located in the vicinity of the leading edge of the 11T recording light pulse A' and has a peak power level $Ppl_1(va)$. The intermediate pulse 2A' is located at the central portion of the 11T recording light pulse A'. The trailing pulse 3A' is located in the vicinity of the trailing edge of the 11T recording light pulse A' and has a peak power level $Ppl_3(va)$.

The erasing light pulse A' is a light pulse for forming a space when the recording linear velocity is at the lowest recording linear velocity va. The erasing light pulse A' is located between the 3T recording light pulse A' and the 11T recording light pulse A' , and has an erasing power level Pe(va).

Pps(va), $Ppl_1(va)$, $Ppl_3(va)$ and Pe(va) satisfy a relationship of $Pe(va) < Ppl_1(va) = Ppl_3(va) < Pps(va)$.

The recording light pulse train B' includes a 3T recording light pulse B', an 11T recording light pulse B' and an erasing light pulse B'.

The 3T recording light pulse B' is a recording light pulse for forming a recording mark having a length of 3T When the recording linear velocity is at the highest recording linear velocity vb. The 3T recording light pulse B' is a peak pulse having a peak power level Pps(vb).

The 11T recording light pulse B' is a recording light pulse for forming a recording mark having a length of 11T when the recording linear velocity is at the highest recording linear velocity vb. The recording light pulse train B' includes a leading pulse 1B', an intermediate pulse 2B' and a trailing pulse 3B'.

The leading pulse 1B' is located in the vicinity of the leading edge of 11T recording light pulse B' and has a peak power level $Ppl_1(vb)$. The intermediate pulse 28' is located at the central portion of the 11T recording light pulse B'. The trailing pulse 3B' is located in the vicinity of the trailing edge of the 11T recording light pulse B' and has a peak power level $Ppl_3(vb)$.

The erasing light pulse B' is a light pulse for forming a space when the recording linear velocity is at the highest recording linear velocity vb. The erasing light pulse B' is located between the 3T recording light pulse B' and the 11T recording light pulse B' and has an erasing power level Pe(vb).

Pps(vb), $Ppl_1(vb)$, $Ppl_3(vb)$ and Pe(vb) satisfy a relationship of $Pe(vb) < Ppl_1(vb) = Ppl_3(vb) < Pps(vb)$.

The 11T recording light pulse does not necessarily include both the leading pulse 1 and the trailing pulse 3. The 11T recording light pulse may include at least one of the leading pulse 1 and the trailing pulse 3 depending on how much the heat energy affects the recording material of the optical disc 101.

Furthermore, it is not limited that the recording power level of the 11T recording light pulse has two values ($Pm < Pp_1 = Pp_3$). The recording power level of the 11T recording light pulse may have more than two values. For example, the recording power level of the 11T recording light pulse may have three values ($Pp_1 \neq Pp_3$ and $Pm < Pp_1$ and $Pm < Pp_3$). Pm represents a middle power level of the intermediate pulse.

Further, the intermediate pulse 2A' and the intermediate pulse 2B' are not limited to one pulse having a predetermined length.

For example, when the recording mark is formed in a relatively low recording rate, the intermediate pulse 2A' and the intermediate pulse 2B' may be multi-pulse train. For example, the multi-pulse train includes a plurality of pulses each having a pulse width of 0.5T.

For example, when the recording mark is formed on an optical disc 101 at a high density and a high speed (e.g. when it is formed on a DVD-RAM), the intermediate pulse 2A' and the intermediate pulse 2B' may be one pulse having a predetermined length. It is possible to properly control the recording mark width by irradiating a pulse having a middle power level Pm which is equal to an integral heat energy of the multi-pulse train. For example, when an optical disc 101 is made of phase change recording materials, the irradiation time of the recording light pulse becomes shorter as the recording rate increases. Therefore, irradiation of pulse with a middle power level Pm rapidly cools the portion at which recording mark is formed. As a result, it is possible to form amorphous mark without cooling with a multi-pulse train.

Figure 5B shows a 3T recording light pulse A', an 11T recording mark A' and a space A', as well as a 3T recording light pulse B', an 11T recording mark B' and a space B'.

The 3T recording mark A' is formed on the optical disc 101 by irradiating the 3T recording light pulse A' onto an information layer (not shown) of the optical disc 101 when the recording linear velocity is at the lowest recording linear velocity va. The 11T recording mark A' is formed on the optical disc 101 by irradiating the 11T recording light pulse A' onto the information layer when the recording linear velocity is at the lowest recording linear velocity va. The space A' is formed on the optical disc 101 by irradiating the erasing light pulse A' onto the information layer when the recording linear velocity is at the lowest recording linear velocity va.

The 3T recording mark B' is formed on the optical disc 101 by irradiating the 3T recording light pulse B' onto the information layer when the recording linear velocity is at the highest recording linear velocity vb. The 11T recording mark B' is formed on the optical disc 101 by irradiating the 11T recording light pulse B' onto the information layer when the recording linear velocity is at the highest recording linear velocity vb. The space B' is formed on the optical disc 101 by irradiating the erasing light pulse B' onto the information layer when the recording linear velocity is at the highest recording linear velocity vb.

When a power level of the pulse for forming relatively short recording mark (for example, the 3T recording mark A') and a power level of the pulse for forming relatively long recording mark (for example, the 11T recording mark A') are the same, it becomes more difficult to evenly form the width of the relatively short recording mark and the width of the relatively long recording mark as the recording rate increases. This is because when the recording rate increases, the irradiation time of the recording light for forming relatively short recording mark decreases, which results in lack of heat energy for the amorphization of the recording mark.

Accordingly, when the recording linear velocity is at the lowest recording linear velocity va, the peak power level Pps(va) is set relatively higher than the peak power level Ppl(va). As a result, the recording mark width MSa of the 3T recording mark A' may be equalized with the recording mark width MLa of the 11T recording mark A'.

The operation of the laser power control circuit 115 will be described below with reference to Figures 5A and 5B.

When the peak power level Ppl(va) and the peak power level Ppl(vb) are determined, the peak power level Ppl(v) can be obtained by a continuous function Ppl = fpl(v) having only the recording linear velocity v as variable. This is because the peak power level Ppl(v) determines the highest temperature of the heat energy necessary for amorphization of the recording mark, and therefore greatly depends on the recording linear velocity, which is the moving velocity of the heat energy.

When the erasing power level Pe(va) and the erasing power level Pe(vb) are determined, the erasing power level Pe(v) can be obtained by a continuous function Pe = fe(v) having only the recording linear velocity v as variable. This is because the erasing power level Pe(v) determines the optimum temperature of the heat energy necessary for crystallization of the space, and therefore greatly depends on the recording linear velocity, which is the moving velocity of the heat energy.

However, the peak power level Pps(v), can not be obtained by a continuous function Pps = fps (v) having only the recording linear velocity v as variable. For Pps'(vb), the width MSb' of the central portion of recording mark is shorter than the width MSb of the optimum 3T recording mark (see Figure 3B). This is because Pps' (vb) is lower than the optimum peak power level Pps(vb) (see Figure 5A).

The peak power level Pps determines the heat energy that equalizes the width of the 3T recording mark and the mark width of the 11T recording mark. Thus, the peak power level Pps depends on the peak power level Ppl (which determines the highest temperature of the heat energy that controls the 11T recording mark) and the erasing power level Pe (which determines the optimum temperature of the heat energy necessary for crystallization of the space).

The second power coefficient $\beta(v)$ defines a coefficient (power ratio) that regulates the dependency between the peak power level Pps, the peak power level Ppl and the erasing power level Pe. The second power coefficient $\beta(v)$ also depends on the recording linear velocity v. In general, the greater the recording linear velocity v, the greater the second power coefficient $\beta(v)$.

In accordance with a decrease in the recording linear velocity v, the peak power level Pps and the peak power level Ppl become equal to each other. For example, the peak power level Pps optimum for evenly forming the mark width of the 3T recording mark and the mark width of the 11T recording mark is closer to the peak power level Ppl in a case where the recording linear velocity v is smaller compared to a case where the recording linear velocity v is greater.

The peak power level Pps(v) depends on the recording linear velocity v, the peak power level Ppl(v) and the erasing power level Pe (v). Accordingly, it satisfies a relationship shown in the following formula (4).

$$\text{Pps} = \beta(v) \times (\text{Ppl} - \text{Pe}) + \text{Pe} \ldots (4)$$

The laser power control circuit 115 controls the peak power level Pps in accordance with the formula (4).In this case, the mark width MSa of the 3T recording mark and the mark width MLa of the 11T recording mark becomes equal when the recording linear velocity is va. Furthermore, the mark width MSb of the 3T recording mark and the mark width MLb of the 11T recording mark becomes equal when the recording linear velocity is vb. Since the second power coefficient $\beta(V)$ is a continuous function $\beta(V)$ of the recording linear velocity v, it is possible to form an even recording mark when the recording linear velocity is v (va $\leq$ v $\leq$ vb).

The relationship between the peak power level Pps (v), the recording linear velocity v, the peak power level Ppl(v) and the erasing power level Pe(v) is not limited to the relationship shown in the formula (4). The relationship between the peak power level Pps (v), the recording linear velocity v, the peak power level Ppl(v) and the erasing power level Pe (v) may be a relationship shown in the following formula (5) or formula (6).

$$Pps = \beta(v) \times Ppl \ldots (5)$$

$$Pps = \beta(v) \times Ppl + Ppl \ldots (6)$$

When the peak power level Pps(v) depends greatly on the absolute value of the peak power level Ppl, the laser power control circuit 115 controls the peak power level Pps (v) in accordance with the formula (5).

When the peak power level Pps(v) depends greatly on the difference of the peak power level Ppl(v), the laser power control circuit 115 controls the peak power level Pps(v) in accordance with the formula (6).

The optimization of the second power coefficient β(v) will be described below with reference to Figures 5A and 5B.

For example, at the recording linear velocity vb, the 11T recording mark is first recorded on the substrate, and then the 3T recording mark is overwritten thereon. Then, β(v) is obtained such that the reproduction jitter for the 3T recording mark is improved. If the β(v) is not within an appropriate range of value, the mark width MSb' of the 3T recording mark becomes narrower than the mark width MLb of the 11T recording mark. As a result, even if the 11T recording mark is overwritten by the 3T recording mark, the 11T recording mark recorded on the substrate remains unerased, and the 3T reproduction jitter is degraded.

Thus, an embodiment of the present invention has been described, with reference to Figures 1, 5A and 5B.

In the embodiment shown in Figures 1, 5A and 5B, for example, the system control circuit 102, the modulation circuit 103, the recording pulse train generation circuit 104 and the laser power control circuit 115 correspond to "a pulse train generating means for generating a pulse train including a first peak pulse and a second peak pulse". The optical head 106, the spindle motor 107, the system control circuit 102 and the recording system section 120 correspond to "a forming means for forming at least one of a long recording mark, a short recording mark and a space onto an information recording medium by irradiating a pulse train onto the information recording medium while rotating the information recording medium at a certain linear velocity". The laser power control circuit 115 corresponds to "a power level determining means for determining a power level of the first peak pulse in accordance with the linear velocity and a power level of the second peak pulse". Furthermore, the 3T recording mark A' or the 3T recording mark B' corresponds to the "a first peak pulse for forming a short recording mark", and the leading pulse 1A' or the trailing pulse 3A' (or the leading pulse 1B' or the trailing pulse 3B') correspond to "a second peak pulse for forming a long recording mark".

However, the information recording apparatus 100 is not limited to the embodiment shown in Figures 1, 5A and 5B. The information recording apparatus 100 can have any structure, as long as the information recording apparatus 100 includes the above-mentioned functions of "the pulse train generating means for generating a pulse train including a first peak pulse and a second peak pulse", "the forming means for forming at least one of a long recording mark, a short recording mark and a space onto an information recording medium by irradiating a pulse train onto the information recording medium while rotating the information recording medium at a certain linear velocity", and "the power level determining means for determining a power level of the first peak pulse in accordance with the linear velocity and a power level of the second peak pulse". Any pulse can be used as a first pulse, as long as it is "a first peak pulse for forming a short recording mark". Any pulse can be used as a second pulse, as long as it is "a second peak pulse for forming a long recording mark".

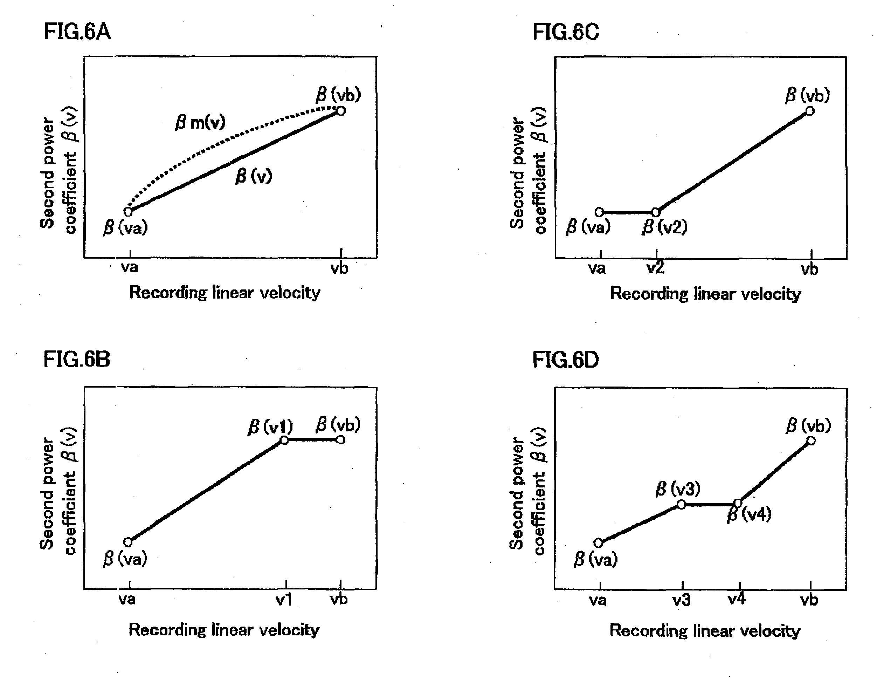

Figures 6A to 6D each show a relationship between the second power coefficient β(v) and the recording linear velocity v. When the value of the second power coefficient β(v) is optimized by the recording linear velocity v, the relationship between the second power coefficient β(v) and the recording linear velocity v presents several patterns depending on the materials of the optical disc 101 and/or the absolute value of the recording linear velocity.

Figure 6A shows a relationship (pattern 5) between the second power coefficient β(v) and the recording linear velocity v. The second power coefficient P(v) increases substantially linearly along with the increase in the recording linear velocity v, between the recording linear velocity va and the recording linear velocity vb. Alternatively, the second power coefficient β(v) may increase substantially exponentially along with the increase in the recording linear velocity v, between the recording linear velocity va and the recording linear velocity vb (see βm (v) indicated in broken lines).

Figure 6B shows a relationship (pattern 6) between the second power coefficient β (v) and the recording linear velocity v.

The second power coefficient β(v) is substantially constant between the recording linear velocity v1 and the recording linear velocity vb (the high speed side of the recording linear velocity v) without depending on the changes in the recording linear velocity v. Between the recording linear velocity v1 and the recording linear velocity vb, the second power coefficient β(v) is substantially constant even if the peak power level Ppl and the erasing power level Pe changes along with the changes in the recording linear velocity v. Accordingly, the power ratio of the peak power level Ppl and the peak power level Pps is substantially constant.

The second power coefficient β(v) increases substantially linearly along with the increase in the recording linear velocity v, between the recording linear velocity va and the recording linear velocity v1.

Figure 6C shows a relationship (pattern 7) between the second power coefficient β(v) and the recording linear velocity v.

The second power coefficient β(v) is substantially constant between the recording linear velocity va and the recording linear velocity v2 (the low speed side of the recording linear velocity v) without depending on the changes in the recording linear velocity v. Between the recording linear velocity va and the recording linear velocity v2, the second power coefficient β(v) is substantially constant even if the peak power level Ppl and the erasing power level Pe changes along with the changes in the recording linear velocity v. Accordingly, the power ratio of the peak power level Ppl and the peak power level Pps is substantially constant.

The second power coefficient β(v) increases substantially linearly along with the increase in the recording linear velocity v, between the recording linear velocity v2 and the recording linear velocity vb.

Figure 6D shows a relationship (pattern 8) between the second power coefficient β(v) and the recording linear velocity v.

The second power coefficient β(v) is substantially constant between the recording linear velocity v3 and the recording linear velocity v4 (the middle speed portion of the recording linear velocity v) without depending on the changes in the recording linear velocity v. Between the recording linear velocity v3 and the recording linear velocity v4, the second power coefficient β(v) is substantially constant even if the peak power level Ppl and the erasing power level Pe changes along with the changes in the recording linear velocity v. Accordingly, the power ratio of the peak power level Ppl and the peak power level Pps is substantially constant.

The second power coefficient β(v) increases substantially linearly along with the increase in the recording linear velocity v, between the recording linear velocity va and the recording linear velocity v3 as well as the recording linear velocity v4 and the recording linear velocity vb.

As described with reference to Figures 5A and 5B, it is not limited that the peak power level Ppl and the peak power level Pps have different values (Ppl ≠ Pps). The peak power level Ppl and the peak power level Pps may have the same value (Ppl - Pps). For example, as described with reference to Figure 6B, when the relationship between the second power coefficient β(v) and the recording linear velocity v is pattern 6, an equation Ppl = Pps may be satisfied between the recording linear velocity v1 and the recording linear velocity vb. For example, as described with reference to Figure 6C, when the relationship between the second power coefficient β(v) and the recording linear velocity v is pattern 7, an equation Ppl = Pps may be satisfied between the recording linear velocity va and the recording linear velocity v2.

The relatively short recording mark is described above as a 3T recording mark, which is a recording mark with the shortest modulation code. However, it may include a certain length of recording mark from the shortest recording mark. For example, the relatively short recording mark may include recording marks having two types of lengths, e.g. a 3T recording mark and a 4T recording mark.

Further, the relatively short recording mark is not limited to a 3T recording mark and the relatively long recording mark is not limited to an 11T recording mark. The relatively long recording mark only needs to be longer than the relatively short recording mark (for example, the relatively long recording mark may be a 5T recording mark and the relatively short recording mark may be a 4T recording mark).

The optical disc 101 may have an area on which a peak power level Pps (v) in previously recorded. The peak power level Pps (v) is determined in accordance with the recording linear velocity v and the peak power level Ppl(v).

The second power coefficient β(v) may be determined to a certain level depending on the recording material of the optical disc 101 and the recording linear velocity. Accordingly, the manufacturer of the optical disc 101 can determine a recommended second power coefficient β(v). For example, the manufacturer of the optical disc 101 can write the value of the second power coefficient β(v) or the arithmetic expression of the second power coefficient β(v) on the control track of the optical disc 101. As a result, it is possible to reduce an optimum processing time of the second power coefficient β(v). The second power coefficient β(v) indicates a relationship between the recording linear velocity v, the peak power level Pps(v) and the peak power level Ppl(v).

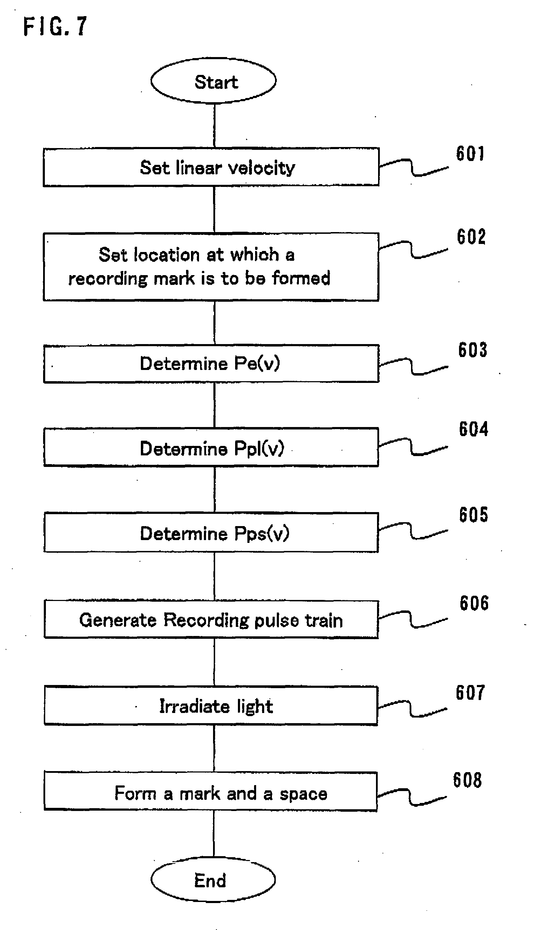

Figure 7 shows a procedure of a formation process for forming a recording mark on an optical disc such that the mark width of the short recording mark may be formed properly.

The procedure of the formation process includes a power level determination step (Steps 601 to 605), a recording pulse train generation step (Step 606) and a recording mark formation step (Steps 607 and 608).

The power level determination step is performed, for example, by the system control circuit 102 and the modulation circuit 103.

The recording pulse train generation step is performed, for example, by the system control circuit 102, the modulation circuit 103, the recording pulse train generation circuit 104 and the laser power control circuit 115.

The recording mark formation step is performed, for example, by the optical head 106, the spindle motor 107, the system control circuit 102 and the recording system section 120.

The procedure of the formation process will be described below for each step, with reference to Figures 1 and 7.

Step 601: The rotational velocity of the spindle motor 107 is set to the linear velocity (v) in the recording area of the optical disc 101.

Step 602: The seek operation of the optical head 106 is performed for the recording area, and a location at which a recording mark is to be formed is set in the recording area.

Step 603: The erasing power level Pe(v) is determined based on the linear velocity (v) at the current location of the recording area.

Step 604: The power level Ppl(v) of the long recording mark peak is determined based on the linear velocity (v) at the current location of the recording area.

Step 605: The power level Pps(v) of the short recording mark is determined based on the peak power level Ppl(v) or based on the erasing power level Pe(v) and peak power level Ppl(v).

Step 606: The recording pulse train generation circuit 104 generates a recording pulse train based on the determined erasing power level Pe(v), the determined peak power level Pps (v) and the determined peak power level Ppl (v)

Step 607: The semiconductor laser apparatus mounted on the optical head 106 is driven by inputting the generated recording pulse train to the laser drive circuit 105. The semiconductor laser apparatus irradiates light corresponding to the generated pulse train.

Step 608: At least one of a recording mark and a space is formed on the optical disc 101. Then, the formation process is completed.

Thus, an illustrative example has been described, with reference to Figure 7.

In the example shown in Figure 7, for example, Steps 601 to 606 correspond to "a step of generating a pulse train including a first peak pulse and a second peak pulse". Steps 607 and 608 correspond to "a step of forming at least one of a long recording mark, a short recording mark and a space onto an information recording medium by irradiating the pulse train onto the information recording medium while rotating the information recording medium at a certain linear velocity". Step 605 corresponds to "a step of determining a power level of the first peak pulse in accordance with the linear velocity and a power level of the second peak pulse". Furthermore, the 3T recording mark A' or the 3T recording mark B' corresponds to "a first peak pulse for forming a short recording mark". The leading pulse 1A' or the trailing pulse 3A' (or the leading pulse 1B' or the trailing pulse 3B') correspond to "a second peak pulse for forming a long recording mark".

However, the procedure of the formation process is not limited to the example shown in Figure 7. Any process may be implemented, ss long as the procedure provides the above-mentioned functions of "a step of generating a pulse train including a first peak pulse and a second peak pulse", "a step of forming at least one of a long recording mark, a short recording mark and a space onto an information recording medium by irradiating a pulse train onto the information recording medium while rotating the information recording medium at a certain linear velocity", and "a step of determining a power level of the first peak pulse in accordance with the linear velocity and a power level of the second peak pulse". Further, any pulse can be used as a first pulse, as long as it is "a first peak pulse for forming a short recording mark". Any pulse can be used as a second pulse, as long as it is "a second peak pulse for forming a long recording mark".

According to the information recording method, the information recording apparatus and the information recording medium, the power level of the first peak pulse for forming the short recording mark is determined depending on the power level of the second peak pulse for forming the long recording mark and the linear velocity (depending on the second power coefficient $\beta(v)$), without depending solely on the linear velocity.

As a result, the width of the short recording mark can be formed properly, even when the width of the short recording mark is formed depending on the linear velocity and the power level of the second peak pulse.

According to the information recording method, the information recording apparatus and the information recording medium, the second power coefficient $\beta(v)$, which is a ratio of the peak power level of the relatively long recording mark and the peak power level of the relatively short recording mark, changes in accordance with the recording linear velocity. Therefore, the width of the relatively long recording mark and the width of the relatively short recording mark becomes even, and a recording/reproduction signal having a favorable overwrite property may be obtained throughout the entire surface of an optical disc.

As described above, the present invention is exemplified by the use of the preferred embodiments of the present invention. However, the present invention should not be interpreted solely based on the embodiments described above. It is understood that the scope of the present invention should be interpreted solely based on the claims. It is also understood that those skilled in the art can implement equivalent scope of technology, based on the description of the present invention and common knowledge from the description of the detailed preferred embodiments of the present invention. Furthermore, it is understood that any patent, any patent application and any references cited in the present specification should be incorporated by reference in the present specification in the same manner as the contents are specifically described therein.

INDUSTRIAL APPLICABILITY

According to the information recording method, the information recording apparatus and the information recording medium of the present invention, the power level of the first pulse is determined depending on the linear velocity and the power level of the second pulse, without depending solely on the linear velocity. The first pulse is a pulse for forming a central portion of the recording mark, among the recording mark and the space. The second pulse is a pulse for forming a portion other than the central portion of the recording mark, among the recording mark and the space.

As a result, the mark width of the central portion of the recording mark can be formed properly, even when the mark width of the central portion of the recording mark is formed depending on the linear velocity and the power level of the second pulse.

**Claims**

1. An information recording method for recording information on a recording medium with a phase change material comprising the steps of:

   (a) generating a pulse train including a first pulse and a second pulse; and
   (b) forming at least a recording mark and a space onto an information recording medium by irradiating the pulse train onto the information recording medium while rotating the information recording medium at a certain linear velocity,

   wherein the first pulse is a pulse for forming a central portion of the recording mark, among the recording mark and the space,
   the second pulse is a pulse forming a portion other than the central portion of the recording mark, among the recording mark and the space, and includes a third pulse for forming at least one of a leading portion of the recording mark and a trailing portion of the recording mark and a fourth pulse for forming the space; and
   the step (a) includes a step of determining a power level of the pulses in accordance with the linear velocity, the power level of the first pulse being moreover determined in accordance with the power level of the second pulse;
   **characterised in that**:

   the power level of the first pulse is determined in accordance with the following formula:

$$Pm = a(v) \times (Pp-Pe)+Pe,$$

   where Pm denotes the power level of the first pulse, a(v) denotes a monotonically increasing function of the linear velocity when changing from a minimum recording linear velocity (va) to a maximum recording linear velocity (vb), Pp denotes a power level of the third pulse, and Pe denotes a power level of the fourth pulse, and the power level of the third pulse is equal to or greater than the power level of the first pulse.

2. An information recording method according to claim 1, wherein:

   a power level of the first pulse becomes equal to a power level of the third pulse in accordance with an increase in the linear velocity.

3. An information recording method according to claim 1, wherein:

   a power level of the third pulse is greater than a power level of the first pulse.

4. An information recording method according to claim 1, wherein:

   a first velocity is between the minimum linear velocity (va) and maximum linear velocity (vb), and a second velocity is between the first velocity and the maximum linear velocity;
   the power level of the first pulse is determined in accordance with only the power level of the third pulse and a (v) is constant, when the linear velocity is between the second velocity and the maximum linear velocity or between the minimum linear velocity and the first velocity.

**5.** An information recording method according to claim 1, wherein:

a first velocity is between the minimum linear velocity (va) and maximum linear velocity (vb), and a second velocity is between the first velocity and the maximum linear velocity;
the power level of the first pulse is determined in accordance with only the power level of the third pulse and a (v) is constant, when the linear velocity is between the first velocity and the second velocity.

**6.** An information recording apparatus for recording information on a recording medium with a phase change material comprising:

a pulse train generating means for generating a pulse train including a first pulse and a second pulse; and
a forming means for forming at least a recording mark and a space onto the information recording medium by irradiating the pulse train onto the information recording medium while rotating the information recording medium at a certain linear velocity,
wherein the first pulse is a pulse for forming a central portion of the recording mark, among the recording mark and the space,
the second pulse is a pulse for forming a portion other than the central portion of the recording mark, among the recording mark and the space, and includes a third pulse for forming at least one of a leading portion of the recording mark and a trailing portion of the recording mark and a fourth pulse for forming the space; and
the pulse train generating means includes a power level determining means for determining a power level of the pulses in accordance with the linear velocity, the power level of the first pulse being moreover determined in accordance with the power level of the second pulse;
**characterised in that**:

the power level of the first pulse is determined in accordance with the following formula:

$$Pm = a(v) \times (Pp-Pe) + Pe;$$

where Pm denotes the power level of the first pulse, a(v) denotes a monotonically increasing function of the linear velocity when changing from a minimum recording linear velocity (va) to a maximum recording linear velocity (vb), Pp denotes a power level of the third pulse, and Pe denotes a power level of the fourth pulse, and
the power level of the third pulse is equal to or greater than the power level of the first pulse.

**Patentansprüche**

**1.** Informationsaufzeichnungsverfahren zum Aufzeichnen von Information auf ein Aufzeichnungsmedium mit einem Phasenwechselmaterial und umfassend die Schritte aus:

a) Gernerieren einer Impulsfolge, die einen ersten Impuls und einen zweiten Impuls umfasst, und
b) Bilden wenigstens einer Aufzeichnungsmarkierung und einer Leerstelle auf dem Informationsaufzeichnungsmedium durch Aufstrahlen der Impulsfolge auf das Informationsaufzeichnungsmedium während das Informationsaufzeichnungsmedium mit einer bestimmten Lineargeschwindiglceit gedreht wird,

wobei der erste Impuls ein Impuls zum Bilden eines Zentralabschnitts der Aufzeichnungsmarkierung zwischen der Aufzeichnungsmarkierung und der Leerstelle ist,
wobei der zweite Impuls ein Impuls zum Bilden eines anderen Abschnitts als der Zentralabschnitt der Aufzeichnungsmarkierung zwischen der Aufzeichnungsmarkierung und der Leerstelle ist und einen dritten Impuls zum Bilden wenigstens eines aus einem vorderen Abschnitt der Aufzeichnungsmarkierung und einem hinteren Abschnitt der Aufzeichnungsmarkierung und einen vierten Impuls zum Bilden der Leerstelle umfasst, und
der Schritt a) einen Schritt des Bestimmens eines Leistungspegels des Impulses in Zusammenhang mit der Lineargeschwindigkeit umfasst, wobei der Leistungspegel des ersten Impulses außerdem in Zusammenhang mit dem Leistungspegel des zweiten Impulses bestimmt wird,
**dadurch gekennzeichnet, dass**:

der Leistungspegel des ersten Impulses in Zusammenhang mit der folgenden Formel bestimmt wird:

$$Pm = a\,(v) \times (Pp\text{-}Pe) + Pe,$$

wobei Pm den Leistungspegel des ersten Impulses bezeichnet, a (v) eine monoton ansteigende Funktion der Lineargeschwindigkeit, wenn sie aus einer minimalen Linearaufzeichnungsgeschwindigkeit (va) zu einer maximalen Linearaufzeichnungsgeschwindigkeit (vb) wechselt, bezeichnet, Pp einen Leistungspegel des dritten Impulses bezeichnet und Pe einen Leistungspegel des vierten Impulses bezeichnet und der Leistungspegel des dritten Impulses größer als der oder gleich dem Leistungspegel des ersten Impulses ist.

2.  Informationsaufzeichnungsverfahren nach Anspruch 1, wobei:

ein Leistungspegel des ersten Impulses gleich einem Leistungspegel des dritten Impulses in Zusammenhang mit einer Zunahme in der Lineargeschwindigkeit wird.

3.  Informationsaufzeichnungsverfahren nach Anspruch 1, wobei:

ein Leistungspegel des dritten Impulses größer als ein Leistungspegel des ersten Impulses ist.

4.  Informationsaufzeichnungsverfahren nach Anspruch 1, wobei:

eine erste Geschwindigkeit zwischen der minimalen Lineargeschwindigkeit (va) und der maximalen Lineargeschwindigkeit (vb) ist und eine zweite Geschwindigkeit zwischen der ersten Geschwindigkeit und der maximalen Lineargeschwindigkeit ist, der Leistungspegel des ersten Impulses in Zusammenhang mit nur dem Leistungspegel des dritten Impulses bestimmt wird und a (v) konstant ist, wenn die Lineargeschwindigkeit zwischen der zweiten Geschwindigkeit und der maximalen Lineargeschwindigkeit oder zwischen der minimalen Lineargeschwindigkeit und der ersten Geschwindigkeit ist.

5.  Informationsaufzeichnungsverfahren nach Anspruch 1, wobei:

eine erste Geschwindigkeit zwischen der minimalen Lineargeschwindigkeit (va) und der maximalen Lineargeschwindigkeit (vb) ist und eine zweite Geschwindigkeit zwischen der ersten Geschwindigkeit und der maximalen Lineargeschwindigkeit ist, der Leistungspegel des ersten Impulses in Zusammenhang mit nur dem Leistungspegel des dritten Impulses bestimmt wird und a (v) konstant ist, wenn die Lineargeschwindigkeit zwischen der ersten Geschwindigkeit und der zweiten Geschwindigkeit ist.

6.  Informationsaufzeichnungsvorrichtung zum Aufzeichnen von Information auf ein Aufzeichnungsmedium mit einem Phasenwechselmaterial, umfassend:

ein Impulsfolgegenerierungsmittel zum Generieren einer Impulsfolge, die einen ersten Impuls und einen zweiten Impuls aufweist, und
ein Bildungsmittel zum Bilden wenigstens einer Aufzeichnungsmarkierung und einer Leerstelle auf dem Informationsaufzeichnungsmedium durch Aufstrahlen der Impulsfolge auf das Informationsaufzeichnungsmedium während das Informationsaufzeichnungsmedium mit einer bestimmten Lineargeschwindigkeit gedreht wird, wobei der erste Impuls ein Impuls zum Bilden eines Zentralabschnitts der Aufzeichnungsmarkierung zwischen der Aufzeichnungsmarkierung und der Leerstelle ist,
der zweite Impuls ein Impuls zum Bilden eines anderen Abschnitts als der Zentralabschnitt der Aufzeichnungsmarkierung zwischen der Aufzeichnungsmarkierung und der Leerstelle ist und einen dritten Impuls zum Bilden wenigstens eines aus einem vorderen Abschnitt der Aufzeichnungsmarkierung und einem hinteren Abschnitt der Aufzeichnungsmarkierung und einen vierten Impuls zum Bilden der Leerstelle umfasst, und
das Impulsfolgegenerierungsmittel ein Leistungspegelbestimmungsmittel zum Bestimmen eines Leistungspegels des Impulses in Zusammenhang mit der Lineargeschwindigkeit umfasst, wobei der Leistungspegel des ersten Impulses außerdem in Zusammenhang mit dem Leistungspegel des zweiten Impulses bestimmt wird, **dadurch gekennzeichnet, dass**:

der Leistungspegel des ersten Impulses in Zusammenhang mit der folgenden Formel bestimmt wird:

$$Pm = a(v) \times (Pp\text{-}Pe) + Pe,$$

wobei Pm den Leistungspegel des ersten Impulses bezeichnet, a (v) eine monoton ansteigende Funktion der Lineargeschwindigkeit, wenn sie aus einer minimalen Linearaufzeichnungsgeschwindigkeit (va) zu einer maximalen Linearaufzeichnungsgeschwindigkeit (vb) wechselt, bezeichnet, Pp einen Leistungspegel des dritten Impulses bezeichnet und Pe einen Leistungspegel des vierten Impulses bezeichnet und

der Leistungspegel des dritten Impulses größer als der oder gleich dem Leistungspegel des ersten Impulses ist.

**Revendications**

1. Procédé d'enregistrement d'informations destiné à enregistrer des informations sur un support d'enregistrement avec un matériau à changement de phase comprenant les étapes qui consistent :

(a) à générer un train d'impulsions comportant une première impulsion et une deuxième impulsion ; et
(b) à former au moins une marque d'enregistrement et un espace sur un support d'enregistrement d'informations en irradiant le train d'impulsions sur le support d'enregistrement d'informations tout en faisant tourner le support d'enregistrement d'informations à une certaine vitesse linéaire,

où la première impulsion est une impulsion permettant de former une partie centrale de la marque d'enregistrement, entre la marque d'enregistrement et l'espace,
la deuxième impulsion est une impulsion formant une partie autre que la partie centrale de la marque d'enregistrement, entre la marque d'enregistrement et l'espace, et comporte une troisième impulsion permettant de former au moins l'une parmi une partie avant de la marque d'enregistrement et une partie arrière de la marque d'enregistrement et une quatrième impulsion permettant de former l'espace ; et
l'étape (a) comporte une étape qui consiste à déterminer un niveau de puissance des impulsions conformément à la vitesse linéaire, le niveau de puissance de la première impulsion étant en outre déterminé conformément au niveau de puissance de la deuxième impulsion ;
**caractérisé en ce que** :

le niveau de puissance de la première impulsion est déterminé selon la formule suivante :

$$Pm = a(v) \times (Pp\text{-}Pe) + Pe,$$

où Pm désigne le niveau de puissance de la première impulsion, a(v) désigne une fonction monotone croissante de la vitesse linéaire lors du changement d'une vitesses (va) linéaire minimale d'enregistrement à une vitesse linéaire maximale (vb) d'enregistrement, Pp désigne un niveau de puissance de la troisième impulsion, et Pe désigne un niveau de puissance de la quatrième impulsion, et le niveau de puissance de la troisième impulsion est supérieur ou égal au niveau de puissance de la première impulsion.

2. Procédé d'enregistrement d'informations selon la revendication 1, dans lequel :

un niveau de puissance de la première impulsion devient égal à un niveau de puissance de la troisième impulsion conformément à une augmentation de la vitesse linéaire.

3. Procédé d'enregistrement d'informations selon la revendication 1, dans lequel :

un niveau de puissance de la troisième impulsion est supérieur à un niveau de puissance de la première impulsion.

4. Procédé d'enregistrement d'informations selon la revendication 1, dans lequel :

une première vitesse est comprise entre la vitesse linéaire minimale (va) et la vitesse linéaire maximale (vb), et une deuxième vitesse est comprise entre la première vitesse et la vitesse linéaire maximale ;
le niveau de puissance de la première impulsion est déterminé conformément uniquement au niveau de puissance de la troisième impulsion et a(v) est constante, lorsque la vitesse linéaire est comprise entre la deuxième vitesse et la vitesse linéaire maximale ou entre la vitesse linéaire minimale et la première vitesse.

**5.** Procédé d'enregistrement d'informations selon la revendication 1, dans lequel :

une première vitesse est comprise entre la vitesse linéaire minimale (va) et la vitesse linéaire maximale (vb), et une deuxième vitesse est comprise entre la première vitesse et la vitesse linéaire maximale ;
le niveau de puissance de la première impulsion est déterminé conformément uniquement au niveau de puissance de la troisième impulsion et un a(v) est constante, lorsque la vitesse linéaire est comprise entre la première vitesse et la deuxième vitesse.

**6.** Appareil d'enregistrement d'informations destiné à enregistrer des informations sur un support d'enregistrement avec un matériau à changement de phase comprenant :

un moyen de génération de train d'impulsions destiné à générer un train d'impulsions comportant une première impulsion et une deuxième impulsion ; et
un moyen de formation destiné à former au moins une marque d'enregistrement et un espace sur le support d'enregistrement d'informations en irradiant le train d'impulsions sur le support d'enregistrement d'informations tout en faisant tourner le support d'enregistrement d'informations à une certaine vitesse linéaire,
où la première impulsion est une impulsion permettant de former une partie centrale de la marque d'enregistrement, entre la marque d'enregistrement et l'espace, et comporte une troisième impulsion permettant de former au moins l'une parmi une partie avant de la marque d'enregistrement et une partie arrière de la marque d'enregistrement et une quatrième impulsion permettant de former l'espace ; et
le moyen de génération de train d'impulsions comporte un moyen de détermination de niveau de puissance destiné à déterminer un niveau de puissance des impulsions conformément à la vitesse linéaire, le niveau de puissance de la première impulsion étant en outre déterminé conformément au niveau de puissance de la deuxième impulsion ;
**caractérisé en ce que** :

le niveau de puissance de la première impulsion est déterminé selon la formule suivante :

$$Pm = a(v) \times (Pp-Pe) + Pe \ ;$$

où Pm désigne le niveau de puissance de la première impulsion, a(v) désigne une fonction monotone croissante de la vitesse linéaire lors du changement d'une vitesse (va) linéaire minimale d'enregistrement à une vitesse (vb) linéaire maximale d'enregistrement, Pp désigne un niveau de puissance de la troisième impulsion, et Pe désigne un niveau de puissance de la quatrième impulsion, et
le niveau de puissance de la troisième impulsion est supérieur ou égal au niveau de puissance de la première impulsion.

**FIG.1**

EP 1 739 663 B1

100

## FIG.2A

Recording linear velocity: vb

$Pm= \alpha(v) \times (Pp-Pe)+Pe$

Recording linear velocity: va

$Pp=fp(v)$

1B Pp(vb)    3B Pp(vb)
2B
Pm(vb)
Pm'(vb)

Pp(va)    1A

Pp₃(va)    3A

$Pm'=fm(v)$

Pm(va)    2A

Pe(va)

11T recording light pulse A

Erasing
light
pulse A

$Pe=fe(v)$

Pe(vb)

11T recording
light pulse B    Erasing light
pulse B

Recording light pulse train A

Recording light
pulse train B    0mW

## FIG.2B

Recording linear velocity: va

MLa

11T recording mark A    Space A

Recording linear velocity: vb

MLb

MLb'
11T recording mark B    Space B

## FIG.2C

11T reproduction
waveform A    PBa

11T reproduction
waveform B

PBb'

PBb

FIG.3C

First power coefficient $\alpha(v)$

$\alpha(va)$  $\alpha(v2)$  $\alpha(vb)$

va  v2  vb

Recording linear velocity v

FIG.3D

First power coefficient $\alpha(v)$

$\alpha(va)$  $\alpha(v3)$  $\alpha(v4)$  $\alpha(vb)$

va  v3  v4  vb

Recording linear velocity v

FIG.3A

First power coefficient $\alpha(v)$

$\alpha(va)$  $\alpha m(v)$  $\alpha(v)$  $\alpha(vb)$

va  vb

Recording linear velocity v

FIG.3B

First power coefficient $\alpha(v)$

$\alpha(va)$  $\alpha(v1)$  $\alpha(vb)$

va  v1  vb

Recording linear velocity v

## FIG. 4

Start

Set linear velocity — 501

Set location at which a recording mark is to be formed — 502

Determine Pe(v) — 503

Determine Pp(v) — 504

Determine Pm(v) — 505

Generate recording pulse train — 506

Irradiate light — 507

Form a mark and a space — 508

End

EP 1 739 663 B1

## FIG.5A

$Pps = \beta(v) \times (Ppl-Pe)+Pe$

Recording linear velocity: va

5B'

Pps(vb)

Recording linear velocity: vb

Pps'(vb)

1B' 3B' Ppk(vb)

$Pps' = fps(v)$

Pps(va) 5A'

Ppli(va) 1A'

Ppk(va)

3A'

$Ppl = fpk(v)$

3T recording
pulse B'

Ppli(vb)

2B'

2A'

Erase
light
pulse B'

3T recording
pulse A'

Erase light
pulse A'

11T Recording light
pulse A'

Pe(va)

$Pe = fe(v)$

Pe(vb)

11T recording
light pulse B'

Recording light
pulse train A'

Recording light
pulse train B'

0mW

## FIG.5B

Recording linear velocity: va
Space A'

Recording linear velocity: vb
Space B'

MSa MLa MSb MSb' MLb

3T recording mark A'     11T recording mark A'

MSb'

MSb'

3T recording mark B'     11T recording mark B'

FIG.6C

FIG.6A

FIG.6D

FIG.6B

## FIG. 7

```
        ┌─────────────┐
        │    Start    │
        └─────────────┘
               │
  ┌────────────────────────────┐
  │     Set linear velocity     │ ～ 601
  └────────────────────────────┘
               │
  ┌────────────────────────────┐
  │     Set location at which a  │ ～ 602
  │   recording mark is to be formed │
  └────────────────────────────┘
               │
  ┌────────────────────────────┐
  │      Determine Pe(v)        │ ～ 603
  └────────────────────────────┘
               │
  ┌────────────────────────────┐
  │      Determine Ppl(v)       │ ～ 604
  └────────────────────────────┘
               │
  ┌────────────────────────────┐
  │      Determine Pps(v)       │ ～ 605
  └────────────────────────────┘
               │
  ┌────────────────────────────┐
  │  Generate Recording pulse train │ ～ 606
  └────────────────────────────┘
               │
  ┌────────────────────────────┐
  │      Irradiate light        │ ～ 607
  └────────────────────────────┘
               │
  ┌────────────────────────────┐
  │   Form a mark and a space   │ ～ 608
  └────────────────────────────┘
               │
        ┌─────────────┐
        │     End     │
        └─────────────┘
```

**EP 1 739 663 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030090981 A

- JP 2001344754 A